# EUROPÄISCHE PATENTSCHRIFT

(11) **EP 2 892 707 B1**
(45) Veröffentlichungstag und Bekanntmachung des Hinweises auf die Patenterteilung: **14.02.2018**
(21) Anmeldenummer: 13760022.7
(22) Anmeldetag: 06.09.2013
(51) Int. Cl.: B29C 49/64, B67C 7/00, B29C 49/06, B29C 49/12, B29C 49/36, B29C 49/46

(54) **VERFAHREN UND VORRICHTUNG ZUM HERSTELLEN VON BEHÄLTNISSEN**
METHOD AND DEVICE FOR MANUFACTURING PLASTIC CONTAINERS
PROCÉDÉ ET DISPOSITIF DE FABRICATION DE RÉCIPIENTS EN MATIÈRE PLASTIQUE

(30) Priorität: 07.09.2012 DE 102012108329
(43) Veröffentlichungstag der Anmeldung: 15.07.2015
(73) Patentinhaber: Krones AG, 93073 Neutraubling (DE)
(72) Erfinder: SÖLLNER, Jürgen, 93073 Neutraubling (DE); MÜLLER, Holger, 93073 Neutraubling (DE)
(74) Vertreter: Bittner, Bernhard
(86) Internationale Anmeldenummer: PCT/EP2013/068481
(87) Internationale Veröffentlichungsnummer: WO 2014/037510

(56) Entgegenhaltungen:
- EP-A1- 2 388 129
- EP-A1- 2 653 396
- WO-A1-98/47770
- DE-A1-102006 053 193
- DE-A1-102008 008 528

## Beschreibung

Die vorliegende Erfindung bezieht sich auf eine Vorrichtung und ein Verfahren zum Herstellen von Getränkebehältnissen. Dabei ist es aus dem Stand der Technik bekannt, dass zunächst aus Kunststoffvorformlingen Kunststoffbehältnisse hergestellt werden und anschließend diese Behältnisse mit einer Flüssigkeit, wie einem Getränk, befüllt werden. Dabei ist es auch bekannt, dass bei der Befüllung von Getränkebehältnissen mit gewissen sensiblen Produkten eine Sterilität der abzufüllenden Behältnisse erforderlich Solche Verfahren und Vorrichtungen werden in DE102006053193, WO9847770, DE102008008528, EP2388129 und EP2653396 offenbart. Insbesondere zum Abfüllen von CO₂-haltigen Getränken muss dabei das zu befüllende Behältnis auf einen definierten Druck vorgespannt werden. PET-Behältnisse werden bei der Herstellung auf Platzifizierungstemperatur erwärmt, um sie entsprechend ausformen zu können. Nach dem Blasforgang bzw. Streckblasvorgang des PET-Behältnisses ist der Boden dieser Behältnisse noch warm. Wird dieses neu hergestellte Behältnis dann unmittelbar nach dem Herstellprozess mit Druck in einem Füller beaufschlagt, verformt sich unter Umständen der Boden und die Flasche bzw. das Behältnis kann hierbei zerstört werden.
Aus dem Stand der Technik sind Verfahren bekannt, bei denen die Behältnisse relativ lange an Umgebungsluft gelagert oder transportiert werden, sodass sich der Bodenbereich abkühlt. Auch ist es bekannt, den Behältnisboden mit einer kalten Flüssigkeit anzuspritzen, um die Abkühlzeit entsprechend zu verkürzen. Bei solchen Anlagen, bei denen eine Blasmaschine direkt mit der Fülleinrichtung geblockt ist, reicht unter Umständen die Transferzeit, in der die Behältnisse von der Herstellungsanordnung zur Fülleinrichtung transportiert werden, nicht aus, um den Boden der Behältnisse ohne eine nasse Bodenkühlung soweit abzukühlen, dass die Behältnisse beim Vorspannen in der Fülleinrichtung nicht deformiert oder beschädigt werden.
Aus der DE 10 2008 026 043 A1 sind ein Verfahren und eine Vorrichtung zur kombinierten Herstellung und Abfüllung von Behältnissen aus Kunststoff bekannt. Dabei wird das Behältnis während eines Transfers durch Aufbringen einen Sprühnebels abgekühlt. Auch die DE 10 2004 023 419 A1 beschreibt ein Verfahren und eine Vorrichtung zum Abkühlen von frisch geblasenen Kunststoffbehältnissen.
Die DE 20 2007 008 120 U1 beschreibt eine Vorrichtung zum Herstellen und Kühlen von Kunststoffhohlkörpern. Dabei befindet sich unterhalb eines Bodens der Behältnisse ein Rohr, welches ein Kühlfluid führt.
Der vorliegenden Erfindung liegt daher die Aufgabe zugrunde, ein Verfahren und eine Vorrichtung zur Verfügung zu stellen, welche auch und insbesondere für CO₂-haltige Getränke enthaltende Behältnisse oder allgemein für solche Behältnisse und insbesondere Kunststoffbehältnisse angewandt werden können, welche während ihres Füllvorgangs mit einem Druck beaufschlagt werden. Diese Aufgabe wird erfindungsgemäß durch die Gegenstände der unabhängigen Ansprüche erreicht. Vorteilhafte Ausführungsformen und Weiterbildungen sind Gegenstand der Unteransprüche. Die Aufgabe wird durch ein Verfahren und eine Vorrichtung nach den unabhängigen Ansprüchen 1 und 7gelöst. Erfindungsgemäß werden die Behältnisse zumindest während des Befüllens innerhalb eines Reinraums transportiert, der mittels einer Dichtungseinrichtung gegenüber einer unsterilen Umgebung abgegrenzt wird.

Im Gegensatz zum Stand der Technik wird daher vorgeschlagen, dass wenigstens das Abfüllen der Behältnisse unter sterilen Bedingungen erfolgt. Dies ist insoweit ungewöhnlich, als zwar aus dem Stand der Technik Anlagen bekannt sind, welche ein steriles Abfüllen von Getränken erlauben, hierbei jedoch die Behältnisse nicht mit einem flüssigen Medium beaufschlagt werden, da dies genau der sterilen Befüllung zuwiderlaufen würde.
Vorteilhaft werden die Behältnisse an ihrer Außenwandung mit dem flüssigen Medium beaufschlagt. Vorteilhaft wird insbesondere ein Bodenbereich der Behältnisse zu dessen Kühlung mit dem flüssigen Medium beaufschlagt. Unter dem Bodenbereich wird dabei insbesondere ein von einem aufrecht stehenden Behältnis unteres Viertel des Behältnisses einschließlich des eigentlichen Bodenabschnitts verstanden.
Vorteilhaft werden die Behältnisse vor oder während ihrer Befüllung mit einem vorgegebenen Innendruck beaufschlagt.
Bei einem weiteren vorteilhaften Verfahren werden die Behältnisse zu ihrer Kühlung mit einem sterilen, flüssigen Medium beaufschlagt. Durch die Verwendung dieses sterilen Mediums kann insbesondere die Sterilität der Behältnisse aufrechterhalten werden. Vorteilhaft wird zur Kühlung Sterilwasser verwendet. Vorteilhaft werden zumindest die Bodenbereiche der Behältnisse wenigstens abschnittsweise und bevorzugt vollständig mit dem Kühlmedium beaufschlagt.

Vorteilhaft handelt es sich bei der Umformungseinrichtung um eine Blasformmaschine und insbesondere eine Streckblasmaschine, mit der die Kunststoffvorformlinge auch mittels einer Reckstange gedehnt werden.

Bei einer weiteren vorteilhaften Ausführungsform sind Beaufschlagungseinrichtungen, beispielsweise Düsen, vorgesehen, welche das flüssige Medium auf den Bodenbereich der Behältnisse aufbringen.
Bei einem weiteren bevorzugten Verfahren wird die zum Kühlen der Behältnisse verwendete Flüssigkeit in einem (Flüssigkeits-)Kreislauf geführt. So ist es beispielsweise möglich, dass die oben erwähnten Beaufschlagungseinrichtungen den Bodenbereich der Behältnisse mit der Kühlflüssigkeit beaufschlagen und diese anschließend, beispielsweise in ein Auffangbehältnis, abtropft und wieder rückgeführt werden kann.
Bei einem weiteren vorteilhaften Verfahren wird die zum Kühlen der Behältnisse verwendete Flüssigkeit selbst gekühlt. So kann beispielsweise in dem oben erwähnten Kreislauf ein Kühlaggregat vorgesehen sein, welches die Flüssigkeit kühlt. Bei diesem Kühlaggregat kann es sich beispielsweise um Peltierelemente handeln, aber auch um einen Wärmetauscher. Bei einer weiteren vorteilhaften Ausführungsform handelt es sich bei der in die Behältnisse abzufüllende Flüssigkeit um ein CO₂-haltiges Getränk. Für derartige Getränke ist das hier vorgeschlagene Verfahren besonders vorteilhaft, da die Abfüllung derartiger Getränke üblicherweise erfordert, dass die Behältnisse unter einen Druck gesetzt werden.
Die vorliegende Erfindung ist weiterhin auf eine Vorrichtung zum Herstellen von mit Flüssigkeit befüllten Behältnissen und insbesondere Getränkebehältnissen gerichtet. Diese Vorrichtung weist eine Umformungseinrichtung auf, welche Kunststoffvorformlinge durch Beaufschlagung mit einem gasförmigen Medium zu Kunststoffbehältnissen umformt. Weiterhin weist die Vorrichtung einen in einer Transportrichtung der Kunststoffvorformlinge stromabwärts bezüglich der Umformungseinrichtung angeordnete Fülleinrichtung auf, welche die Kunststoffbehältnisse mit einer Flüssigkeit befüllt. Weiterhin weist die Vorrichtung eine Kühleinrichtung auf, welche zwischen der Umformungseinrichtung und der Fülleinrichtung angeordnet ist und welche die Kunststoffbehältnisse wenigstens abschnittsweise zu deren Kühlung mit einem flüssigen Medium beaufschlagt.

Erfindungsgemäß weist wenigstens die Fülleinrichtung einen Reinraum auf, innerhalb dessen die Behältnisse während ihrer Befüllung transportierbar sind und der mittels wenigstens einer Dichtungseinrichtung gegenüber einer Umgebung abgegrenzt ist.

Es wird daher auch vorrichtungsseitig vorgeschlagen, dass eine Kühlung, insbesondere der Bodenbereiche der Behältnisse, vorgenommen wird und anschließend eine sterile Abfüllung. Im Stand der Technik sind derartige Bodenkühlungen bei Aseptikanlagen noch nicht bekannt. Dies beruhe, wie oben erwähnt, darauf, dass die Beaufschlagung der Behältnisse an sich der Sterilität zuwiderlaufen würde. Bei derartigen Aseptikanlagen, bei denen die Behälter vor einer Blasmaschine oder auch unmittelbar danach sterilisiert werden, müsste der Boden des neu hergestellten Behältnisses dann mit einem Medium gekühlt werden, welches steril ist. Ansonsten würde das Behältnis durch die Bodenkühlung wieder rekontaminiert.

Vorteilhaft handelt es sich bei der Vorrichtung um eine geblockte Vorrichtung, was insbesondere bedeutet, dass die Fülleinrichtung und die Umformungseinrichtung miteinander synchronisiert sind. In derartigen geblockten Anlagen kann jedoch das Kühlen des Behältnisses an der Umgebung (insbesondere unter Verwendung einer langen Transferzeit) sehr unwirtschaftlich sein.

Vorteilhaft weist die Vorrichtung eine Transporteinrichtung auf, welche die Behältnisse von der Umformungseinrichtung zu der Fülleinrichtung transportiert. Vorteilhaft weist diese Transporteinrichtung eine Vielzahl von Halteeinrichtungen zum Halten der Behältnisse während ihres Transports auf. Vorteilhaft halten diese Halteeinrichtungen die Behältnisse in einem Mündungsbereich derselben, beispielsweise unterhalb deren Tragring.

Es wird daher, wie oben erwähnt, vorgeschlagen, dass zum Kühlen des Bodens des neu hergestellten Behältnisses dieses mit einem sterilen Medium beaufschlagt wird und insbesondere von unten beaufschlagt wird. Damit erfolgt eine Beaufschlagung des Behältnisses insbesondere in einem Transferbereich zwischen der Blasmaschine und der Fülleinrichtung. Die Bodenkühlung soll dabei bevorzugt in einen bereits bestehenden Transferbereich zwischen einer Blasmaschine und der Fülleinrichtung integriert werden.
Bei einer weiteren vorteilhaften Ausführungsform weist auch die Umformungseinrichtung einen Reinraum auf, innerhalb dessen die Behältnisse während ihrer Umformung transportierbar sind und der mittels einer weiteren Dichtungseinrichtung gegenüber der Umgebung abgegrenzt ist. Bei diesem Verfahren werden also bereits aus den Kunststoffvorformlingen unter sterilen Bedingungen die Behältnisse geblasen und anschließend deren Boden gekühlt.

Vorteilhaft wird also als Kühlmedium für die Bodennachkühlung der Behältnisse das gleiche Medium benutzt, welches auch für die Befüllung dieser hydraulischen Abdichtung bzw. des Kanals der drehenden Teile des Füllers bzw. Verschließers und/oder der Blasmaschine verwendet wird. Der Vorteil dieser Vorgehensweise besteht darin, dass das besagte Medium bereits in diesen Anlagen vorhanden ist und auf verschiedene Arten hergestellt werden kann. Vorteilhaft handelt es sich bei diesem Medium um Sterilwasser, welches besonders bevorzugt mit einem Sterilisationsmittel und insbesondere einem oxidativen Sterilisationsmittel versetzt ist.
Vorteilhaft weist die Vorrichtung eine Herstellungseinrichtung zum Herstellen dieses Sterilwassers auf. Dabei kann es sich beispielsweise um eine Sterilwasser-Filtrationseinrichtung handeln oder auch um eine thermische Anlage (UHT-Prozess). Als Sterilisationsmittel kann beispielsweise H₂O₂ verwendet werden, vorzugsweise in einer Konzentration von 2% bis 5%. Auch wäre es möglich, Peressigsäure zu verwenden (bevorzugt in einer Konzentration zwischen 500 ppm und 2000 ppm.
Daneben sind auch andere Sterilisationsmittel denkbar.

Bei einer weiteren vorteilhaften Ausführungsform wird damit die gleiche Flüssigkeit, die auch zum Abdichten verwendet wird, für die besagte Kühleinrichtung verwendet.

Bei einer weiteren vorteilhaften Ausführungsform weist die Vorrichtung eine Kühleinrichtung zur Kühlung der den Behältnissen zu deren Kühlung zugeführten Flüssigkeit auf. Dabei ist es vorteilhaft möglich, dass dieses sterile Kühlmedium für die Behältnisnachkühlung bzw. zur Bodenkühlung über einen Kühler auf niedrigen Temperaturen gehalten wird. Vorteilhaft werden dabei Temperaturen zwischen 1° und 30°, bevorzugt zwischen 2° und 25°, besonders bevorzugt zwischen 3° und 20° und besonders bevorzugt zwischen 3° und 15° verwendet. Vorteilhaft ist auch ein Kühlkreislauf vorgesehen, innerhalb dessen das zur Kühlung verwendete flüssige Medium zirkuliert.

Dabei ist es möglich, dass die Kühleinrichtung mit Substanzen, wie beispielsweise Glykol, versorgt wird. Diese Substanzen können dabei auch aus der Umformungseinrichtung stammen. Weiterhin ist es denkbar, dass in bestimmten Zeitintervallen auch das Kühlmedium für die Behältnisnachkühlung zumindest zum Teil abgelassen und wieder frisch befüllt wird, um die Konzentration an Sterilisationsmittel im Sterilwasser konstant halten zu können.

Vorteilhaft weist dieser Kühlkreislauf auch eine Sammeleinrichtung auf, mittels der beispielsweise von den Behältnissen wieder abtropfendes Medium gesammelt werden kann.

Vorteilhaft handelt es sich bei den oben erwähnten Dichtungseinrichtungen um sogenannte Wasserschlösser, die in jedem dem umlaufenden Kanal auch ein Schwert aufweisen, welches gegenüber dem Kanal beweglich ist und welches in die Dichtflüssigkeit eintaucht. Vorteilhaft ist der besagte umlaufende Kanal stationär ausgebildet.

Weiterhin können vorteilhaft Pumpen vorgesehen sein, welche den besagten Kühlkreislauf betreiben. Daneben kann auch eine Pumpeinrichtung vorgesehen sein, welche die Flüssigkeit von den Dichtungseinrichtungen zu dem besagten Kühlkreislauf transportiert. Auch können Ventile vorgesehen sein, wie etwa Rückschlagventile, welche ein Rückströmen des sterilen Mediums in die Dichtungseinrichtungen verhindern, oder auch Ventile, welche je nach den Füllständen der Dichtungseinrichtungen und auch des Kühlkreislaufs entsprechend die Zu- und Abführung des sterilen Kühlmediums bewirken.

Es wird daher erstmalig eine Behältnisnachkühlung in einem Sterilbereich vorgeschlagen. Vorteilhaft ist daher auch ein Reinraum in demjenigen Bereich vorgesehen, in dem das Behältnis von der Umformungseinrichtung zu der Fülleinrichtung transportiert wird. Dabei wird vorteilhaft, wie oben erwähnt, das Kühlmedium aus bestehenden Systemen zur Befüllung von Wasserschlössern verwendet. Auf diese Weise kann erreicht werden, dass keine zusätzliche Ausmischung von Wasser und Chemikalien notwendig ist und so das System einfach gehalten werden kann.

Durch die Umsetzung dieser Bodennachkühlung ist es auch möglich, Aseptikanlagen für karbonisierte Produkte, insbesondere auch in Blockbauweise, auszuführen.

Es wird so kein zusätzlicher Bauraum benötigt und die so ausgerüstete Anlage bleibt kompakt. Durch die verwendeten kurzen Wege ergibt sich auch ein geringes ReKontaminationsrisiko. Weiterhin kann dadurch, dass für das Kühlwasser Sterilwasser und Sterilisationsmittel verwendet werden, auch auf eine Reinigung des Leitungssystems für die Behältnisnachkühlung mit Lauge oder Säure verzichtet werden. Weitere Vorteile und Ausführungsformen ergeben sich aus den beigefügten Figuren:

Darin zeigen:
- Fig. 1: eine schematische Darstellung einer erfindungsgemäßen Vorrichtung;
- Fig. 2: eine Darstellung einer Dichtungseinrichtung in der Art eines Wasserschlosses; und
- Fig. 3: eine Darstellung zur Veranschaulichung der zusätzlichen Behältniskühlung.

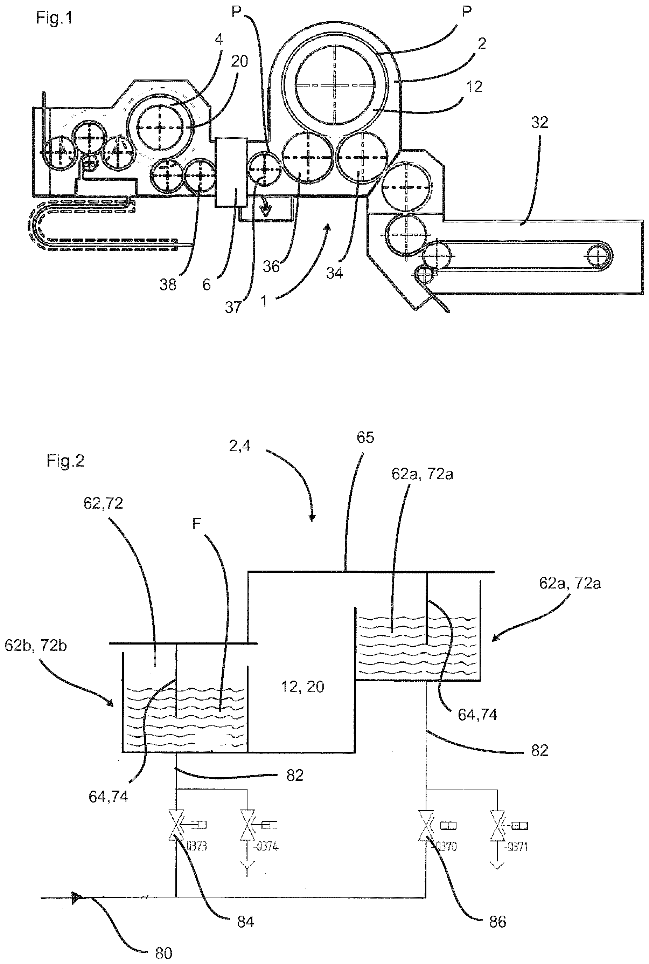

Fig. 1 zeigt eine schematische Darstellung einer erfindungsgemäßen Vorrichtung 1 zum Herstellen von Getränkebehältnissen. Dabei ist eine Erwärmungseinrichtung 32, wie insbesondere ein Infrarotofen, vorgesehen, der zugeführte Kunststoffvorformlinge (nicht gezeigt) erwärmt. Im Anschluss werden die so erwärmten Kunststoffvorformlinge über eine Zuführeinrichtung, wie einen Zuführstern 34 der in ihrer Gesamtheit mit 2 bezeichneten Umformungseinrichtung 2 zugeführt. In dieser Umformungseinrichtung 2 werden die Kunststoffvorformlinge zu den Kunststoffbehältnissen umgeformt und über eine Abführeinrichtung, wie einen Abführstern 36, abgeführt.

Anschließend werden die Behältnisse durch eine Kühleinrichtung 6 (nur schematisch gezeigt) insbesondere im Innenbereich ihres Bodens gekühlt und anschließend an eine Fülleinrichtung 4 übergeben. Das Bezugszeichen P kennzeichnet den Transportpfad der Behältnisse durch die Anlage. Das Bezugszeichen 20 kennzeichnet grob schematisch einen Reinraum, innerhalb dessen die Behältnisse befüllt werden. Das Bezugszeichen 12 kennzeichnet ebenfalls einen Reinraum, innerhalb dessen die Behältnisse umgeformt werden. Auch die Kühleinrichtung 6 weist einen entsprechenden Reinraum auf, durch welchen hindurch die Behältnisse geführt werden.

Daneben ist eine Transporteinrichtung vorgesehen, welche die Behältnisse von der Umformungseinrichtung 2 zu der Fülleinrichtung 4 transportiert. Diese Transporteinrichtung weist bevorzugt wenigstens einen Transportstern und bevorzugt mehrere Transportsterne auf. Bei der in Fig. 1 dargestellten Ausführungsform sind zwei Transportsterne 37, 39 sichtbar. Auch die Kühleinrichtung 6 kann einen Transportstern (nicht gezeigt) aufweisen, der Behältnisse während deren Kühlung entlang eines kreisförmigen Transportpfads fördert. Daneben kann auch die Fülleinrichtung einen Transportstern aufweisen, an dem die Behältnisse während ihrer Befüllung transportiert werden. Auch die Umformungseinrichtung kann einen drehbaren Träger wie etwa ein Blasrad aufweisen, mittels dem die Kunststoffbehältnisse während ihres Umformungsvorgangs transportiert werden.

Fig. 2 zeigt eine schematische Darstellung von Dichtungseinrichtungen 62 und 72, wie sie für die Fülleinrichtung 4 (Bezugszeichen 62) und die Umformungseinrichtung 2 (Bezugszeichen 72) verwendet werden können. Entsprechend beziehen sich die Bezugszeichen 2 und 4 auch auf diese beiden Anlagenteile. Die Dichtungseinrichtungen bzw. Abdichteinrichtungen 62, 72 weisen dabei jeweils die Kanäle 62a, 62b, 72a, 72b auf, in denen ein Sterilmedium F geführt wird. Die Bezugszeichen 64 und 74 beziehen sich auf Schwerter, die in diese Flüssigkeit eintauchen. Diese Schwerter sind dabei hier an einen um eine vorgegebene Drehachse (nicht gezeigt) drehbaren Träger 65 angeordnet. Die Kanäle 62a, 62b, 72a und 72b ruhen.

Das Bezugszeichen 80 bezieht sich auf eine Zuleitung, welches den Kanälen 62a, 62b, 72a, 72b ein Sterilmedium, d.h. die Flüssigkeit F zuführt. Dabei können Ventile 84, 86 vorgesehen sein, welche zur Regulierung eines Füllstands der Flüssigkeit innerhalb der umlaufenden Kanäle 62a, 62b, 72a, 72b dienen. Über eine Verbindungleitung 82 kann die Flüssigkeit den Kanälen zugeführt werden.

Zwischen den Kanälen werden die jeweiligen Reinräume 12, 20 gebildet, in den die Behältnisse transportiert und dabei auch behandelt, hier also umgeformt bzw. befüllt werden. Das Bezugszeichen 65 bezieht sich auf einen Träger, an dem hier die beiden Schwerter 64, 74 angeordnet sind. Dieser Träger, der hier drehbar ist, bildet auch eine Grenze des Reinraums aus. Über einen sich an das Ventil 84 bzw. 86 anschließenden Leitungsabschnitt gelangt die Flüssigkeit in die jeweiligen Kanäle 62a, 72a, 62b, 72b.

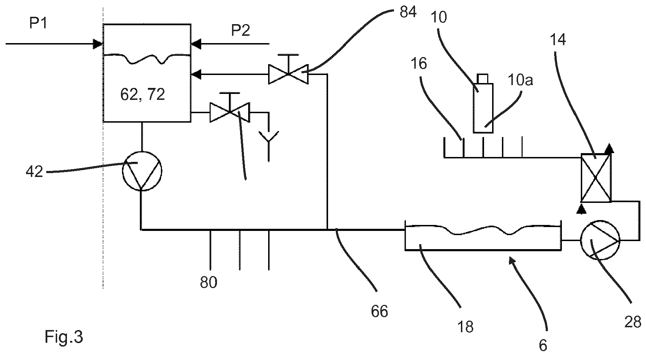

Fig. 3 zeigt eine schematische Darstellung zur Veranschaulichung der erfindungsgemäßen Vorrichtung. Auch hier ist wieder die Zuführeinrichtung 80 dargestellt, welche die Kanäle 62a, 62b, 72a, 72b mit dem Sterilmedium versorgt. Wie durch den Pfeil P1 dargestellt, kann dabei den Kanälen Sterilwasser zugeführt werden und, wie durch den Pfeil P2 dargestellt, zusätzlich ein Sterilisationsmedium, wie oben gezeigt. Über das Ventil 84 kann eine Wiederauffüllung der Kanäle erfolgen. Gleichzeitig ist eine Verbindungsleitung 66 vorgesehen, welche die in ihrer Gesamtheit mit 6 bezeichnete Kühleinrichtung versorgt. Diese Kühleinrichtung 6 weist ebenfalls eine Pumpe 28 auf, welche zur Versorgung von Beaufschlagungseinrichtungen 16 dient, welche insbesondere einen Bodenbereich 10a der Behältnisse 10 mit dem flüssigen Medium beaufschlagen bzw. besprühen.

Weiterhin ist ein Kühlelement 14 vorgesehen, welches dieses flüssige Medium zum Beaufschlagen der Behältnisse kühlt. Von den Behältnissen 10 abtropfendes Medium kann mit einem Sammelbehälter 18 teilweise aufgefangen und wiederverwendet werden. Damit ist die Kühleinrichtung 6 hier auch als Kreislauf ausgebildet. Um einem Schwund des Kühlmediums entgegenzuwirken, kann dieses wieder über die Zuführleitung 66 nachgefüllt werden. Auch kann eine Pumpe 42 vorgesehen sein, welche das Sterilmedium von den Kanälen 62a, 62b, 72a, 72b zu der Kühleinrichtung 6 fördert.

### Bezugszeichenliste

- 1: Vorrichtung
- 2: Umformungseinrichtung
- 4: Fülleinrichtung
- 6: Kühleinrichtung
- 10: Behältnisse
- 10a: Bodenbereich
- 12: Reinraum
- 14: Kühlelement
- 16: Beaufschlagungseinrichtung
- 18: Sammelbehälter
- 20: Reinraum
- 28: Pumpe
- 32: Erwärmungseinrichtung
- 34: Zuführstern
- 36: Abführstern
- 37, 38: Transportsterne
- 62, 72: Abdichtungen, Dichtungseinrichtungen
- 62a, 62b: Kanäle
- 72a, 72b: Kanäle
- 64, 74: Schwerter
- 65: Träger
- 66: Verbindungsleitung
- 80: Zuleitung
- 82: Verbindungsleitung
- 84, 86: Ventile
- P: Transportpfad
- F: Sterilmedium/Flüssigkeit
- P1: Pfeil Zuführung von Sterilwasser
- P2: Pfeil Zuführung eines Sterilmediums

## Patentansprüche

1. Verfahren zum Herstellen von mit Flüssigkeit befüllten Behältnissen (10), insbesondere von Getränkebehältnissen, wobei Kunststoffvorformlinge mittels einer Umformungseinrichtung (2) zu Kunststoffbehältnissen (10) umgeformt werden, diese Kunststoffbehältnisse zu einer Fülleinrichtung (4) transportiert werden und mittels dieser Fülleinrichtung mit einer Flüssigkeit befüllt werden, wobei die Behältnisse (10) auf ihrem Transportpfad zwischen der Umformungseinrichtung (2) und der Fülleinrichtung (4) wenigstens abschnittsweise durch Beaufschlagung mit einem flüssigen Medium gekühlt werden, wobei die Behältnisse zumindest während des Befüllens innerhalb eines Reinraums (20) transportiert werden, der mittels einer Dichtungseinrichtung (62) gegenüber einer Umgebung abgegrenzt ist,
**dadurch gekennzeichnet, dass**
der wenigstens eine Reinraum (20) durch Verwendung einer in einem umlaufenden Kanal (62a, 62b, 72a, 72b) geführten sterilen Flüssigkeit abgedichtet wird und die Flüssigkeit aus diesem Kanal (62a, 62b, 72a, 72b) auch zur Kühlung der Behältnisse verwendet wird.

2. Verfahren nach Anspruch 1,
**dadurch gekennzeichnet, dass**
die Behältnisse zu ihrer Kühlung mit einem sterilen flüssigen Medium beaufschlagt werden.

3. Verfahren nach Anspruch 2,
**dadurch gekennzeichnet, dass**
die Behältnisse auch während ihres Umformungsvorgangs in der Umformungseinrichtung (2) innerhalb eines Reinraums (12) transportiert werden.

4. Verfahren nach wenigstens einem der vorangegangenen Ansprüche,
**dadurch gekennzeichnet, dass**
die zum Kühlen der Behältnisse (10) verwendete Flüssigkeit in einem Flüssigkeitskreislauf geführt wird.

5. Verfahren nach wenigstens einem der vorangegangenen Ansprüche,
**dadurch gekennzeichnet, dass**
die zum Kühlen der Behältnisse (10) verwendete Flüssigkeit selbst gekühlt wird.

6. Verfahren nach wenigstens einem der vorangegangenen Ansprüche,
**dadurch gekennzeichnet, dass**
die in die Behältnisse (10) abzufüllende Flüssigkeit ein CO₂ - haltiges Getränk ist.

7. Vorrichtung (1) zum Herstellen von mit Flüssigkeit befüllten Behältnissen (10) mit einer Umformungseinrichtung (2), welche Kunststoffvorformlinge durch Beaufschlagung mit einem gasförmigen Medium zu Kunststoffbehältnissen (10) umformt, mit einer in einer Transportrichtung der Kunststoffvorformlinge stromabwärts bezüglich der Umformungseinrichtung (2) angeordneten Fülleinrichtung (4), welche die Kunststoffbehältnisse (10) mit einer Flüssigkeit befüllt und mit einer Kühleinrichtung (6), welche zwischen der Umformungseinrichtung (2) und der Fülleinrichtung (4) angeordnet ist, und welche die Kunststoffbehältnisse (10) wenigstens abschnittsweise zu deren Kühlung mit einem flüssigen Medium beaufschlagt,
wobei wenigstens die Fülleinrichtung (4) einen Reinraum (20) aufweist, innerhalb dessen die Behältnisse während ihrer Befüllung transportierbar sind und der mittels wenigstens einer Dichtungseinrichtung (62, 72) gegenüber einer Umgebung abgegrenzt ist, **dadurch gekennzeichnet, dass**
die wenigstens eine Dichtungseinrichtung (62, 72) einen mit einer Flüssigkeit befüllbaren umlaufenden Kanal (62a, 62b, 72a, 72b) aufweist und eine Leitung (66) vorgesehen ist, über welche Flüssigkeit von diesem Kanal (62a, 62b, 72a, 72b) dem Behältnis (10) zu dessen Kühlung zuführbar ist.

8. Vorrichtung (1) nach Anspruch 7,
**dadurch gekennzeichnet, dass**
die Umformungseinrichtung (2) einen Reinraum (12) aufweist, innerhalb dessen die Behältnisse während ihrer Umformung transportierbar sind und der mittels wenigstens einer weiteren Dichtungseinrichtung (72) gegenüber der Umgebung abgegrenzt ist.

9. Vorrichtung (1) nach Anspruch 7,
**dadurch gekennzeichnet, dass**
die Vorrichtung (1) eine Kühleinrichtung (6) zur Kühlung der den Behältnissen zu deren Kühlung zugeführten Flüssigkeit aufweist.

## Claims

1. A method of producing containers (10) filled with liquid, in particular beverage containers, wherein plastics material pre-forms are shaped to form plastics material containers (10) by means of a shaping device (2), these plastics material containers are conveyed to a filling device (4) and are filled with a liquid by means of this filling device, wherein the containers (10) are cooled on their conveying path between the shaping device (2) and the filling device (4) at least in sections by being acted upon with a liquid medium,
wherein the containers are conveyed at least during the filling inside a clean room (20) which is bounded off from an environment by means of a sealing device (62),
**characterized in that**
the at least one clean room (20) is sealed off by the use of a sterile liquid conveyed in a continuous duct (62a, 62b, 72a, 72b), and the liquid from this duct (62a, 62b, 72a, 72b) is also used in order to cool the containers.

2. A method according to claim 1,
**characterized in that**
the containers are acted upon with a sterile liquid medium in order to cool them.

3. A method according to claim 2,
**characterized in that**
the containers are also conveyed inside a clean room (12) during their shaping procedure in the shaping device (2).

4. A method according to at least one of the preceding claims,
**characterized in that**
the liquid used for cooling the containers (10) is conveyed in a liquid circuit.

5. A method according to at least one of the preceding claims,
**characterized in that**
the liquid used for cooling the containers (10) is itself cooled.

6. A method according to at least one of the preceding claims,
**characterized in that**
the liquid to be filled into the containers (10) is a CO₂-containing beverage.

7. An apparatus (1) for the production of containers (10) filled with liquid, with a shaping device (2) which shapes plastics material pre-forms into plastics material containers (10) by acting upon them with a gaseous medium, with a filling device (4) which is arranged in a conveying direction of the plastics material pre-forms downstream with respect to the shaping device (2) and which fills the plastics material containers (10) with a liquid, and with a cooling device (6) which is arranged between the shaping device (2) and the filling device (4) and which acts upon the plastics material containers (10) with a liquid medium at least in sections in order to cool them,
wherein at least the filling device (4) has a clean room (20), inside which the containers are capable of being conveyed during the filling thereof and which is bounded off from an environment by means of at least one sealing device (62, 72),
**characterized in that**
at least one sealing device (62, 72) has a continuous duct (62a, 62b, 72a, 72b) capable of being filled with a liquid, and a line (66) is provided by way of which liquid is capable of being supplied from this duct (62a, 62b,72a, 72b) to the container (10) for the cooling thereof.

8. An apparatus (1) according to claim 7,
**characterized in that**
the shaping device (2) has a clean room (12), inside which the containers are capable of being conveyed during the shaping thereof and which is bounded off from the environment by means of at least one further sealing device (72).

9. An apparatus (1) according to claim 7,
**characterized in that**
the apparatus (1) has a cooling device (6) for cooling the liquid supplied to the containers for the cooling thereof.

## Revendications

1. Procédé servant à fabriquer des contenants (10) remplis de liquide, en particulier des contenants de boisson, dans lequel des préformes en plastique sont mises en forme en des contenants en plastique (10) au moyen d'un système de mise en forme (2), lesdits contenants en plastique sont transportés en direction d'un système de remplissage (4) et sont remplis d'un liquide au moyen dudit système de remplissage, dans lequel les contenants (10) sont refroidis au moins par endroits du fait de l'effet exercé par un milieu liquide sur leur trajet de transport entre le système de mise en forme (2) et le système de remplissage (4), dans lequel les contenants sont transportés au moins au cours du remplissage à l'intérieur d'une salle blanche (20), qui est délimitée par rapport à l'environnement au moyen d'un système d'étanchéité (62),
**caractérisé en ce que**
l'au moins une salle blanche (20) est étanchéifiée du fait de l'utilisation d'un liquide stérile guidé dans un canal (62a, 62b, 72a, 72b) périphérique et le liquide provenant dudit canal (62a, 62b, 72a, 72b) est également utilisé aux fins du refroidissement des contenants.

2. Procédé selon la revendication 1,
**caractérisé en ce que**
les contenants sont soumis à l'action d'un milieu stérile liquide aux fins de leur refroidissement.

3. Procédé selon la revendication 2,
**caractérisé en ce que**
les contenants sont transportés à l'intérieur d'une salle blanche (12) également au cours de leur opération de mise en forme dans le système de mise en forme (2).

4. Procédé selon au moins l'une quelconque des revendications précédentes,
**caractérisé en ce que**
le liquide utilisé aux fins du refroidissement des contenants (10) est guidé dans un circuit de liquide.

5. Procédé selon au moins l'une quelconque des revendications précédentes,
**caractérisé en ce que**
le liquide utilisé aux fins du refroidissement des contenants (10) est lui-même refroidi.

6. Procédé selon au moins l'une quelconque des revendications précédentes,
**caractérisé en ce que**
le liquide à transvaser dans les contenants (10) est une boisson contenant du CO₂.

7. Dispositif (1) servant à fabriquer des contenants (10) remplis de liquide à l'aide d'un système de mise en forme (2), qui met en forme des préformes en plastique en des contenants en plastique (10) par l'effet exercé par un milieu gazeux, à l'aide d'un système de remplissage (4) disposé en aval par rapport au système de mise en forme (2) dans une direction de transport des préformes en plastique, lequel système de remplissage remplit les contenants en plastique (10) d'un liquide, et à l'aide d'un système de refroidissement (6), qui est disposé entre le système de mise en forme (2) et le système de remplissage (4) et qui soumet les contenants en plastique (10) au moins par endroits aux fins de leur refroidissement à l'action d'un milieu liquide,
dans lequel au moins le système de remplissage (4) présente une salle blanche (20), à l'intérieur de laquelle les contenants peuvent être transportés au cours de leur remplissage et qui est délimitée par rapport à un environnement au moyen d'au moins un système d'étanchéité (62, 72),
**caractérisé en ce que**
l'au moins un système d'étanchéité (62, 72) présente un canal (62a, 62b, 72a, 72b) périphérique pouvant être rempli d'un liquide, et un conduit (66) est prévu, par l'intermédiaire duquel du liquide provenant dudit canal (62a, 62b, 72a, 72b) peut être amené au contenant (10) aux fins de son refroidissement.

8. Dispositif (1) selon la revendication 7,
**caractérisé en ce que**
le système de mise en forme (2) présente une salle blanche (12), à l'intérieur de laquelle les contenants peuvent être transportés au cours de leur mise en forme et qui est délimitée par rapport à l'environnement au moyen d'au moins un autre système d'étanchéité (72).

9. Dispositif (1) selon la revendication 7,
**caractérisé en ce que**
le dispositif (1) présente un système de refroidissement (6) servant au refroidissement du liquide amené aux contenants aux fins de leur refroidissement.
